# EUROPEAN PATENT APPLICATION

(11) **EP 3 849 180 A1**
(43) Date of publication of application: **14.07.2021**
(21) Application number: 20216769.8
(22) Date of filing: 23.12.2020
(51) Int. Cl.: H04N 19/103, H04N 19/189, G06N 3/08

(54) **ENCODING OR DECODING DATA FOR DYNAMIC TASK SWITCHING**

(30) Priority: 10.01.2020 FI 20205026
(71) Applicant: Nokia Technologies Oy, 02610 Espoo (FI)
(72) Inventor: CRICRI, Francesco, 33100 Tampere (FI); REZAZADEGAN TAVAKOLI, Hamed, 02170 Espoo (FI); HANNUKSELA, Miska, 33610 Tampere (FI); AKSU, Emre Baris, 33800 Tampere (FI)
(74) Representative: Nokia EPO representatives

(57) **Abstract**

Example embodiments provide a system for encoding and decoding data for dynamic task switching. An encoder device may encode data for an initial task. Based on the initial task the encoder device may determine an initial encoding parameter set and encode the data accordingly. A decoder device may receive and decode the data and use the decoded data to perform the initial task. The initial task may be followed by a subsequent task in a sequence of tasks and it may be desirable to perform the subsequent task based on data encoded with different quality. A subsequent encoding parameter set may be therefore determined based the subsequent task. The encoder device may encode data with the subsequent encoding parameter set and provide the encoded data to the decoder device for causing performance of the subsequent task. Apparatuses, methods, and computer programs are disclosed.

## Description

### TECHNICAL FIELD

The present application generally relates to encoding and decoding of data for different types of applications. In particular, some example embodiments of the present application relate to encoding and/or decoding of video data for machine learning related tasks.

### BACKGROUND

Machine learning (ML) may be utilized for different applications in different types of devices, such as mobile phones. Examples of applications include compression and analysis of media data, such as for example image or video data. An encoder may be configured to transform input data into a compressed representation suitable for storage or transmission. A decoder may be configured to reconstruct the data based on the compressed representation. Quality of encoding or decoding may be adjusted based on various parameters. A machine learning model, for example a neural network, may be trained to perform one or more steps of the encoding and decoding process and/or to perform a task based on decoded data.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

Example embodiments enable encoding and decoding of data for dynamic task switching. This may be achieved by the features of the independent claims. Further implementation forms are provided in the dependent claims, the description, and the drawings.

According to a first aspect, an apparatus comprises at least one processor; and at least one memory including computer program code; the at least one memory and the computer program code configured to, with the at least one processor, cause the apparatus at least to: determine an initial encoding parameter set based on at least one initial task associated with data subject to encoding; encode the data based on the initial encoding parameter set; determine a subsequent encoding parameter set based on at least one subsequent task in a sequence of tasks associated with the data; and encode at least one portion of the data based on the subsequent encoding parameter set.

According to a second aspect, a method comprises determining an initial encoding parameter set based on at least one initial task associated with data subject to encoding; encoding the data based on the initial encoding parameter set; determining a subsequent encoding parameter set based on at least one subsequent task in a sequence of tasks associated with the data; and encoding at least one portion of the data based on the subsequent encoding parameter set.

According to a third aspect, a computer program is configured, when executed by a processor, to cause an apparatus at least to: determine an initial encoding parameter set based on at least one initial task associated with data subject to encoding; encode the data based on the initial encoding parameter set; determine a subsequent encoding parameter set based on at least one subsequent task in a sequence of tasks associated with the data; and encode at least one portion of the data based on the subsequent encoding parameter set.

According to a fourth aspect, an apparatus comprises means for determining an initial encoding parameter set based on at least one initial task associated with data subject to encoding; means for encoding the data based on the initial encoding parameter set; means for determining a subsequent encoding parameter set based on at least one subsequent task in a sequence of tasks associated with the data; and means for encoding at least one portion of the data based on the subsequent encoding parameter set.

According to a fifth aspect, an apparatus comprises at least one processor; and at least one memory including computer program code; the at least one memory and the computer program code configured to, with the at least one processor, cause the apparatus at least to: receive data encoded based on an initial encoding parameter set, wherein the initial encoding parameter set is associated with at least one initial task; decode the received data and cause performance of the at least one initial task based on the decoded data; receive at least one portion of the data encoded based on a subsequent encoding parameter set associated with at least one subsequent task in a sequence of tasks; and decode the at least one portion of the data and cause performance of the at least one subsequent task based on the at least one decoded portion of the data.

According to a sixth aspect, a method comprises receiving data encoded based on an initial encoding parameter set, wherein the initial encoding parameter set is associated with at least one initial task; decoding the received data and causing performance of the at least one initial task based on the decoded data; receiving at least one portion of the data encoded based on a subsequent encoding parameter set associated with at least one subsequent task in a sequence of tasks; and decoding the at least one portion of the data and causing performance of the at least one subsequent task based on the at least one decoded portion of the data.

According to a seventh aspect, a computer program is configured, when executed by a processor, to cause an apparatus at least to: receive data encoded based on an initial encoding parameter set, wherein the initial encoding parameter set is associated with at least one initial task; decode the received data and cause performance of the at least one initial task based on the decoded data; receive at least one portion of the data encoded based on a subsequent encoding parameter set associated with at least one subsequent task in a sequence of tasks; and decode the at least one portion of the data and cause performance of the at least one subsequent task based on the at least one decoded portion of the data.

According to an eighth aspect, an apparatus comprises means for receiving data encoded based on an initial encoding parameter set, wherein the initial encoding parameter set is associated with at least one initial task; means for decoding the received data and means for causing performance of the at least one initial task based on the decoded data; means for receiving at least one portion of the data encoded based on a subsequent encoding parameter set associated with at least one subsequent task in a sequence of tasks; and means for decoding the at least one portion of the data and means for causing performance of the at least one subsequent task based on the at least one decoded portion of the data.

Many of the attendant features will be more readily appreciated as they become better understood by reference to the following detailed description considered in connection with the accompanying drawings.

### DESCRIPTION OF THE DRAWINGS

The accompanying drawings, which are included to provide a further understanding of the example embodiments and constitute a part of this specification, illustrate example embodiments and together with the description help to explain the example embodiments. In the drawings:
FIG. 1 illustrates an example of a data coding system comprising an encoder device and a decoder device, according to an example embodiment;
FIG. 2 illustrates an example of an apparatus configured to practice one or more example embodiments;
FIG. 3 illustrates examples of an encoder device and a decoder device, according to an example embodiment;
FIG. 4 illustrates an example of a neural network, according to an example embodiment;
FIG. 5 illustrates an example of an elementary computation unit, according to an embodiment;
FIG. 6 illustrates an example of an auto-encoder comprising an encoder neural network and a decoder neural network, according to an example embodiment;
FIG. 7 illustrates an example of a video encoder, according to an example embodiment;
FIG. 8 illustrates an example of a video decoder, according to an example embodiment;
FIG. 9 illustrates an example of encoding and decoding data for dynamic task switching with task simulation at the encoder device, according to an example embodiment;
FIG. 10 illustrates an example of a sequence of tasks, according to an example embodiment.
FIG. 11 illustrates an example of a data structure for determining a sequence of tasks, according to an example embodiment.
FIG. 12 illustrates an example of encoding and decoding data for dynamic task switching without task simulation at the encoder device, according to an example embodiment;
FIG. 13 illustrates an example of a method for encoding data for dynamic task switching, according to an example embodiment; and
FIG. 14 illustrates an example of a method for decoding data for dynamic task switching, according to an example embodiment.

Like references are used to designate like parts in the accompanying drawings.

### DETAILED DESCRIPTION

Reference will now be made in detail to example embodiments, examples of which are illustrated in the accompanying drawings. The detailed description provided below in connection with the appended drawings is intended as a description of the present examples and is not intended to represent the only forms in which the present examples may be constructed or utilized. The description sets forth the functions of the example and a possible sequence of steps for constructing and operating the example. However, the same or equivalent functions and sequences may be accomplished by different examples.

Reducing distortion in image and video compression may be intended for increasing human perceptual quality, because the human user may be considered as the consumer for the compressed data. However, with the advent of machine learning, for example deep learning, machines operating as autonomous agents may be configured to analyze data and even make decisions without human intervention. Examples of such analysis tasks include object detection, scene classification, semantic segmentation, video event detection, anomaly detection, pedestrian tracking, etc. Example use cases and applications include self-driving cars, video surveillance cameras and public safety, smart sensor networks, smart TV and smart advertisement, person re-identification, smart traffic monitoring, drones, etc. Since decoded data is more likely to be consumed by machines, it may be desirable to apply other quality metrics in addition human perceptual quality, when considering media compression for inter-machine communication.

Furthermore, a decoder device may comprise or have access to multiple machine learning (ML) functions, for example neural networks (NN). Multiple ML functions may be used in a certain combination with or without other type of functions, such as for example non-ML functions including, but not limited to, user related functions. Execution of the functions may be controlled by an orchestrator sub-system, which may be for example configured to determine an order of execution among functions. Such controller or orchestrator may operate based on rules which may be predefined or which may be learned from data. The multiple functions may be executed for example in a sequence of tasks, where a subsequent task is performed based on an output of a previously performed task.

According to an example embodiment, an encoder device may encode data for an initial task. Based on a type of the initial task the encoder device may determine an initial encoding parameter set and encode the data accordingly. A decoder device may receive and decode the data and use the decoded data to perform the initial task. The initial task may be followed by a subsequent task in a sequence of tasks and it may be desirable to perform the subsequent task based on data encoded with different quality. Therefore, a subsequent encoding parameter set may be determined based on type of the subsequent task. The encoder may encode the same data, or a portion thereof, with the subsequent encoding parameter set and provide the encoded data to the decoder device for performing the subsequent task.

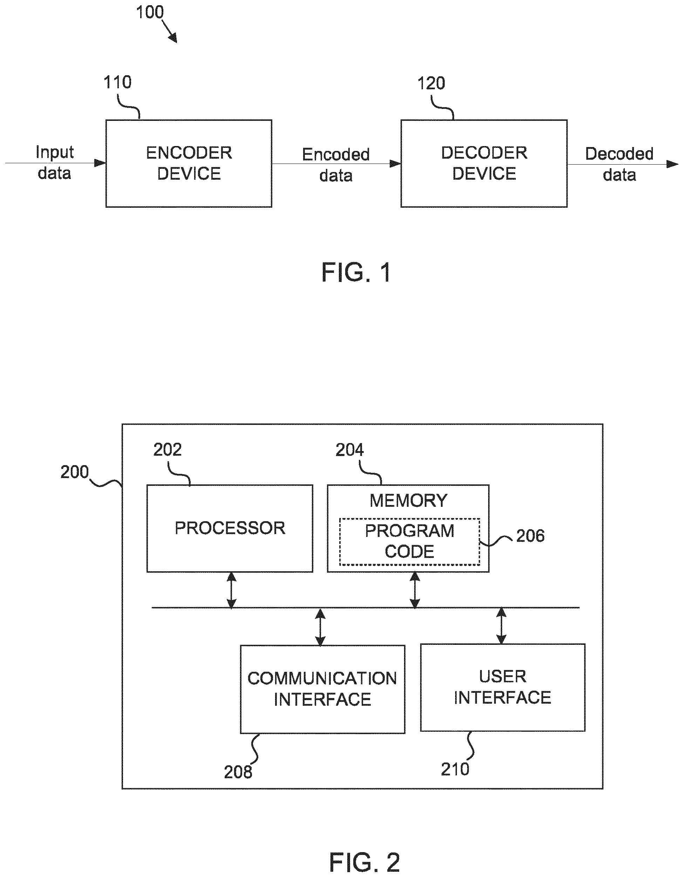

FIG. 1 illustrates an example of a data coding system 100 comprising an encoder device 110 and a decoder device 120, according to an example embodiment. Encoder device 110 may be configured to receive input data and produce encoded data, which may comprise an encoded representation of the input data. The encoded data may for example comprise a compressed version of the input data. The encoded data may be generated based on one or more encoding parameters stored at encoder device 110 or received by encoder device 110. The encoding parameters may be associated with a quality level.

The encoded data may be delivered to decoder device 120 by various means, for example over a communication network. Therefore, the encoder device 110 may comprise a transmitter. The decoder device 120 may comprise a receiver. Alternatively, encoded data may be stored on a storage medium such as for example a hard drive or an external memory and retrieved from the memory by decoder device 120. The decoder device 120 may be configured to reconstruct the input data based on the encoded data received from the encoder device 110, or otherwise accessed by decoder device 120. As a result, decoded data may be output by the decoder device 120.

According to an example embodiment, encoder device 110 and decoder device 120 may be embodied as separate devices. It is however possible that a single device comprises one or more encoders and one or more decoders, for example as dedicated software and/or hardware components. Encoder device 110 may be also referred to as a video encoder or video compressor. Decoder device 120 may be also referred to as a video decoder or video decompressor. As will be further described below, an encoder may be implemented as an algorithmic encoder or as a neural encoder comprising an encoder neural network. A decoder may be implemented as an algorithmic decoder or as a neural decoder comprising a decoder neural network. Even though some example embodiments are directed to video encoders and video decoders, it is appreciated that example embodiments may be also applied to other type of data, a such as for example image data and/or audio data.

FIG. 2 illustrates an example of an apparatus configured to practice one or more example embodiments, for example encoder device 110 or decoder device 120. Apparatus 200 may comprise at least one processor 202. The at least one processor may comprise, for example, one or more of various processing devices, such as for example a co-processor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, or the like.

The apparatus may further comprise at least one memory 204. The memory may be configured to store, for example, computer program code or the like, for example operating system software and application software. The memory may comprise one or more volatile memory devices, one or more non-volatile memory devices, and/or a combination thereof. For example, the memory may be embodied as magnetic storage devices (such as hard disk drives, floppy disks, magnetic tapes, etc.), optical magnetic storage devices, or semiconductor memories (such as mask ROM, PROM (programmable ROM), EPROM (erasable PROM), flash ROM, RAM (random access memory), etc.).

Apparatus 200 may further comprise communication interface 208 configured to enable apparatus 200 to transmit and/or receive information, for example compressed video data to/from other devices. The communication interface may be configured to provide at least one wireless radio connection, such as for example a 3GPP mobile broadband connection (e.g. 3G, 4G, 5G); a wireless local area network (WLAN) connection such as for example standardized by IEEE 802.11 series or Wi-Fi alliance; a short range wireless network connection such as for example a Bluetooth, NFC (near-field communication), or RFID connection; a local wired connection such as for example a local area network (LAN) connection or a universal serial bus (USB) connection, or the like; or a wired Internet connection.

Apparatus 200 may further comprise a user interface 210 comprising an input device and/or an output device. The input device may take various forms such a keyboard, a touch screen, or one or more embedded control buttons. The output device may for example comprise a display, a speaker, a vibration motor, or the like.

When the apparatus is configured to implement some functionality, some component and/or components of the apparatus 200, such as for example the at least one processor 202 and/or the memory 204, may be configured to implement this functionality. Furthermore, when the at least one processor 202 is configured to implement some functionality, this functionality may be implemented using program code 206 comprised, for example, in the memory 204.

The functionality described herein may be performed, at least in part, by one or more computer program product components such as software components. According to an example embodiment, the apparatus comprises a processor or processor circuitry, such as for example a microcontroller, configured by the program code when executed to execute the embodiments of the operations and functionality described. Alternatively, or in addition, the functionality described herein can be performed, at least in part, by one or more hardware logic components. For example, and without limitation, illustrative types of hardware logic components that can be used include Field-programmable Gate Arrays (FPGAs), application-specific Integrated Circuits (ASICs), application-specific Standard Products (ASSPs), System-on-a-chip systems (SOCs), Complex Programmable Logic Devices (CPLDs), Graphics Processing Units (GPUs).

The apparatus 200 may comprise means for performing at least one method described herein. In one example, the means comprises the at least one processor 202, the at least one memory 204 including program code 206, the at least one memory 204 and the program code 206 configured to, with the at least one processor 202, cause the apparatus 200 to perform the method(s).

Apparatus 200 may comprise a computing device such as for example mobile phone, a tablet computer, a laptop, an internet of things (IoT) device, or the like. Examples of IoT devices include, but are not limited to, consumer electronics, wearables, and smart home appliances. In one example, apparatus 200 may comprise a vehicle such as for example a car. Although apparatus 200 is illustrated as a single device it appreciated that, wherever applicable, functions of apparatus 200 may be distributed to a plurality of devices, for example to implement example embodiments as a cloud computing service.

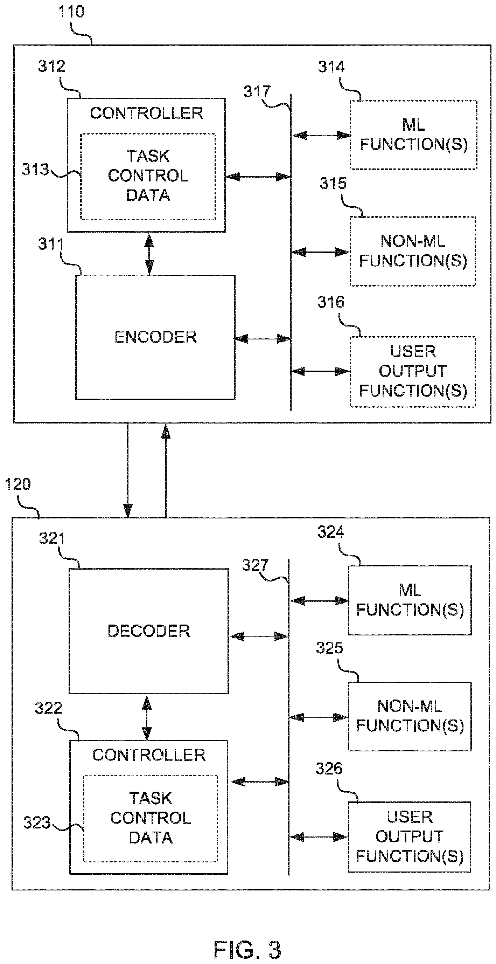

FIG. 3 illustrates examples of an encoder device 110 and a decoder device 120, according to an example embodiment. Encoder device 110 may comprise an encoder 311, for example an algorithmic encoder or a neural encoder. The encoder 311 may be configured to compress data, for example video data or other media data, into an encoded representation. The encoder device 110 may further comprise a controller 312 configured to control operation of encoder 311 and/or a plurality of functions 314, 315, 316 configured to perform or simulate one or more tasks.

The decoder device 120 may comprise a decoder 321, for example an algorithmic decoder or a neural decoder. The decoder 321 may be configured to reconstruct data from the encoded representation generated at encoder 311. The decoder device 120 may further comprise a controller 322 configured to control operation of decoder 311 and/or one or more functions 324, 325, 326 configured to perform one or more tasks. The controller 321 may comprise, or have access to, task control data 323. The task control data 323 may for example comprise patterns or sequences of tasks to be performed by the plurality of functions 324, 325, 326 at decoder device 120. In general, the task control data 323 may comprise data that enables to determine or estimate a sequence of tasks.

The plurality of functions may comprise one or more machine learning (ML) functions 324 configured to perform one or more machine learning tasks. Examples of machine learning tasks include detecting an object of interest, classifying an object, recognizing identity of an object, or the like. The plurality of functions may comprise one or more non-ML functions 325 such as for example algorithms or other non-learned functions. The non-ML functions 325 may for example include algorithms for performing similar tasks as the machine learning functions 324. The plurality of functions may comprise one or more user output functions 326. The user output functions may be for example configured to present decoded data such that a human user may observe the data. An example of a user related function is a video player. The different functions, even within a single type of function, may be associated with different metrics for encoding or decoding quality and therefore example embodiments provide a dynamically adaptive encoding or decoding method for a sequence of tasks.

According to an example embodiment, also the encoder device 110 may comprise a plurality of machine learning (ML), non-ML, and/or user related functions 314, 315, and 316. These functions may be same or similar to functions 324, 325, and 326. The encoder device 110 may use functions 314, 315, 316 to simulate functions performed at decoder device 120, as will be further described below. It is therefore sufficient that encoder device 110 has some form of the functions available. For example, a neural network of decoder device 120 may be approximated at the encoder device 110 by a neural network that has been trained for the same task, but which does not share the same architecture. The encoder device may further comprise task control data 313 similar, but not necessarily identical, to task control data 323.

According to an example embodiment, the encoder device 110 may comprise any combination of the following machine learning function options:

Same set of neural networks, for example in terms of task, architecture, and training parameters. For example, a classifier neural network with ResNet50 architecture and trained on ImageNet.

Similar but not same neural net, for example in terms of task. For example, a classifier neural network.

A subset or superset of the neural networks present or accessible to decoder device 120. For example, encoder device 110 may comprise a first subset corresponding to neural networks present or accessible to decoder device 120, which are similar in terms of at least one parameter but not identical to the networks available for decoder device 120, and another subset identical to the networks available at decoder device 120.

Furthermore, encoder device 110 and decoder device 120 may comprise the same or a similar orchestrator sub-systems. For example, controllers 312 and 322 may be configured to perform similar or identical functions. The task control data 313 and 323 may be similar or identical.

Controller 312 and/or encoder 311 may communicate with the plurality of functions 314, 315, 316 over a communication interface 317. The communication interface may comprise an internal interface within encoder device 110, for example a data bus and/or function calls within a software architecture. Even though functions 314, 315, 316 have been illustrated as residing within encoder device 110, it is appreciated that one or more of the functions may be located external or remote to encoder device 110, for example a server. Therefore, communication interface 317 may alternatively, or additionally, comprise an external communication interface such as for example a wireless or wired connection. Decoder device 120 may comprise a similar communication interface 327 for communicating with internal or external functions 324, 325, 326.

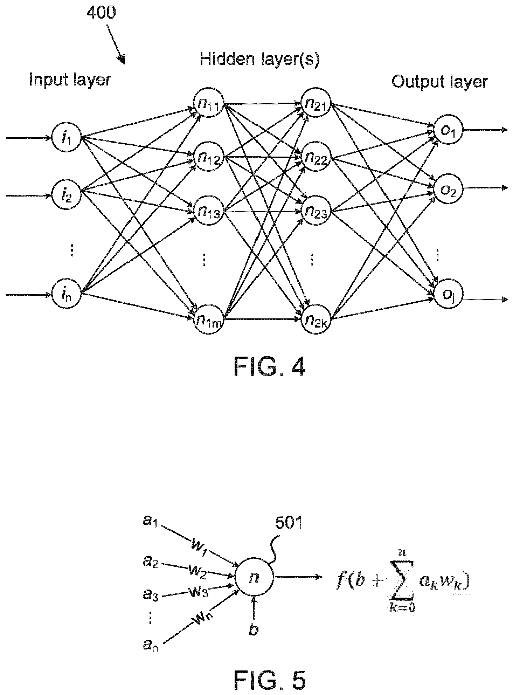

FIG. 4 illustrates an example of a neural network, according to an example embodiment. Neural network 400 may be configured to perform a particular task, for example as one of the machine learning functions 314 or 316. Neural network 400 may comprise an input layer, one or more hidden layers, and an output layer. Nodes of the input layer, *i*₁ to *i*ₙ, may be connected to one or more of the m nodes of the first hidden layer, *n*₁₁ to *n*₁ₘ. Nodes of the first hidden layer may be connected to one or more of the k nodes of the second hidden layer, *n*₂₁ to *n*₂ₖ. It is appreciated that even though the example neural network of FIG. 4 illustrates two hidden layers, a neural network may apply any number and any type of hidden layers. Neural network 400 may further comprise an output layer. Nodes of the last hidden layer, in the example of FIG. 4 the nodes of second hidden layer, may be connected to one or more nodes of the output layer, *O*ₗ to *O*ⱼ. It is noted that the number of nodes may be different for each layer of the network. A node may be also referred to as a neuron, a computation unit, or an elementary computation unit. Terms neural network, neural net, network, and model may be used interchangeably. Weights of the neural network may be referred to as learnable parameters or simply as parameters. In the example of FIG. 4, one or more of the layers may be fully connected layers, for example layers where each node is connected to every node of a previous layer.

Two example architectures of neural networks include feed-forward and recurrent architectures. Feed-forward neural networks are such that there is no feedback loop. Each layer takes input from one or more previous layers and provides its output as the input for one or more of the subsequent layers. Also, units inside certain layers may take input from units in one or more of preceding layers and provide output to one or more of following layers.

Initial layers, for example layers close to the input data, may extract semantically low-level features. In an example image or video data, the low-level features may correspond to edges and textures in images or video frames. Intermediate and final layers may extract more high-level features. After the feature extraction layers there may be one or more layers performing a certain task, such as classification, semantic segmentation, object detection, denoising, style transfer, super-resolution, or the like.

In recurrent neural networks there is a feedback loop from one or more nodes of one or more subsequent layers. This causes the network to become becomes stateful. For example, the network may be able to memorize information or a state.

FIG. 5 illustrates an example of an elementary computation unit, according to an example embodiment. The elementary computation unit may comprise a node 501, which may be configured to receive one or more inputs, *a*₁ to *a*ₙ, from one or more nodes of one or more previous layers and compute an output based on the input values received. The node 501 may also receive feedback from one or more nodes of one or more subsequent layers. Inputs may be associated with parameters to adjust the influence of a particular input to the output. For example weights *w*₁ to *w*ₙ associated with the inputs *a*₁ to *a*ₙ may be used to multiply the input values *a*₁ to *a*ₙ. The node 501 may be further configured combine the inputs to an output, or an activation. For example, the node 501 may be configured to sum the modified input values. A bias or offset b may be also applied to add a constant to the combination of modified inputs. Weights and biases may be learnable parameters. For example, when the neural network is trained for a particular task, the values of the weights and biases associated with different inputs and different nodes may be updated such that an error associated with performing the task is reduced to an acceptable level.

Furthermore, an activation function *f*() may be applied to control when and how the node 501 provides the output. Activation function may be for example a non-linear function that is substantially linear in the region of zero but limits the output of the node when the input increases or decreases. Examples of activation functions include, but are not limited to, a step function, a sigmoid function, a tanh function, a ReLu (rectified linear unit) function. The output may be provided to nodes of one or more following layers of the network, and/or to one or more nodes of one or more previous layers of the network.

A forward propagation or a forward pass may comprise feeding a set of input data through the layers of the neural network 400 and producing an output. During this process the weights and biases of the neural network 400 affect the activations of individual nodes and thereby the output provided by the output layer.

One property of neural networks and other machine learning tools is that they are able to learn properties from input data, for example in supervised way or in unsupervised way. Learning may be based on teaching the network by a training algorithm or based on a meta-level neural network providing a training signal.

In general, a training algorithm may include changing some properties of the neural network such that its output becomes as close as possible to a desired output. For example, in the case of classification of objects in images or video frames, the output of the neural network may be used to derive a class or category index, which indicates the class or category that the object in the input data belongs to. Training may happen by minimizing or decreasing the output's error, also referred to as the loss.

During training the generated or predicted output may be compared to a desired output, for example ground-truth data provided for training purposes, to compute an error value. The error may be calculated based on a loss function. Updating the neural network may be then based on calculating a derivative with respect to learnable parameters of the network. This may be done for example using a backpropagation algorithm that determines gradients for each layer starting from the final layer of the network until gradients for the learnable parameters have been obtained. Parameters of each layer are updated accordingly such that the loss is iteratively decreased. Examples of losses include mean squared error, cross-entropy, or the like. In deep learning, training may comprise an iterative process, where at each iteration the algorithm modifies parameters of the neural network to make a gradual improvement of the network's output, that is, to gradually decrease the loss.

Training phase of the neural network may be ended after reaching an acceptable error level. In inference phase the trained neural network may be applied for a particular task, for example, to provide a classification of an unseen image to one of a plurality of classes based on content of an input image.

Training a neural network may be seen as an optimization process, but the final goal may be different from a typical goal of optimization. In optimization, the goal may be to minimize a functional. In machine learning, a goal of the optimization or training process is to make the model learn the properties of the data distribution from a limited training dataset. In other words, the goal is to learn to use a limited training dataset in order to learn to generalize to previously unseen data, that is, data which was not used for training the model. This is usually referred to as generalization.

In practice, data may be split into at least two sets, a training data set and a validation data set. The training data set may be used for training the network, for example to modify its learnable parameters in order to minimize the loss. The validation data set may be used for checking performance of the network on data which was not used to minimize the loss as an indication of the final performance of the model. In particular, the errors on the training set and on the validation data set may monitored during the training process to understand the following issues: 1) if the network is learning at all - in this case, the training data set error should decrease, otherwise the model is in the regime of underfitting; 2) if the network is learning to generalize - in this case, also the validation set error should decrease and not be much higher than the training data set error. If the training data set error is low, but the validation data set error is much higher than the training data set error, or it does not decrease, or it even increases, the model is in the regime of overfitting. This means that the model has just memorized properties of the training data set and performs well on that set, but performs poorly on a set not used for tuning its parameters.

In addition to implementing machine learning functions 314, 324, neural networks may be also used for implementing encoder 311 or decoder 321. Neural networks may be used either to perform the whole encoding or decoding process or to perform some steps of the encoding or decoding process. The former option may be referred to as end-to-end learned compression. Learned compression may be for example based on an auto-encoder structure that is trained to encode and decode video data.

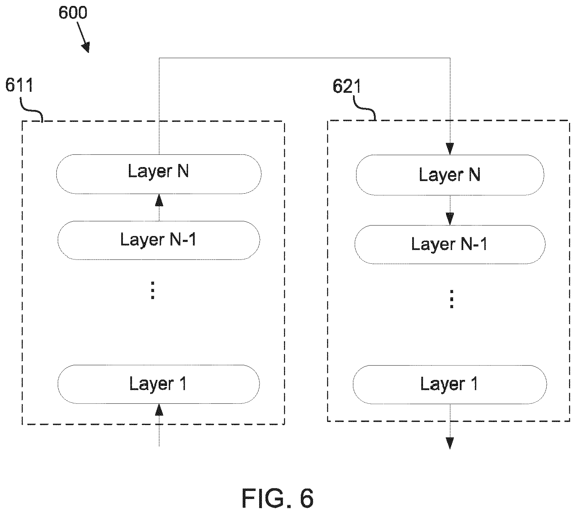

FIG. 6 illustrates an example of an auto-encoder comprising an encoder neural network and a decoder neural network, according to an example embodiment. An auto-encoder is a neural network comprising an encoder network 611, which is configured to compress data or make the input data to be more compressible at its output (for example having lower entropy), and a decoder network 621, which takes the compressed data (e.g., the data output by the encoder network 611 or data output by a step performed after the encoder network 611) and outputs a reconstruction of the original data, possibly with some loss. It is noted that example embodiments may be applied to various other type of neural networks configured to be applied in encoding or decoding process and the auto-encoder 600 is provided only as an example.

The auto-encoder 600 may be trained based on a training dataset. For each training iteration, a subset of data may be sampled from the training dataset and input to the encoder network 611. The output of the encoder 611 may be subject to further processing steps, such as for example quantization and/or entropy coding. The output of the encoder network 611 and any additional steps after that, is input to the decoder network 621 which reconstructs the original data input to the encoder network 611. The reconstructed data may however differ from the original input data. The difference between the input data and the reconstructed data may be referred to as the loss. However, the auto-encoder pipeline may be also designed in a way that there is no loss in the reconstruction. A loss or error value may be computed by comparing the output of the decoder network 621 to the input of the encoder network 611. The loss value may be computed for example based on a mean-squared error (MSE) loss function. Another loss function may be used for encouraging the output of the encoder to be more compressible, for example to have low entropy. This loss may be used in addition to the loss measuring the quality of data reconstruction. In general, a plurality of losses may be computed and then added together for example via a linear combination (weighted average) to obtain a combined loss. The combined loss value may be then differentiated with respect to the weights and/or other parameters of the encoder network 611 and decoder network 621. Differentiation may be done for example based on backpropagation, as described above. The obtained gradients may then be used to update or change the parameters (e.g. weights), for example based on a stochastic gradient descent algorithm or any other suitable algorithm. This process may be iterated until a stopping criterion is met. As a result, the neural auto-encoder is trained to compress the input data and to reconstruct original data from the compressed representation. According to an example embodiment, the encoder 311 may comprise a neural encoder, for example the encoder network part 611 of the auto-encoder 600. According to an example embodiment, the decoder 321 may comprise a neural decoder, for example the decoder network part 621 of the auto-encoder 600.

Video coding may be alternatively performed by algorithmic video codecs. Examples of algorithmic video codecs include hybrid video codecs, such as for example similar to ITU-T H.263 and H.264 standards. Hybrid video encoders may code video information in two phases. Firstly, pixel values in a certain picture area, for example a block, may be predicted for example by motion compensation means or spatial means. Motion compensation may comprise finding and indicating an area in one of the previously coded video frames that corresponds to the block being coded. Applying spatial means may comprise using pixel values around the block to be coded in a specified manner.

Secondly, the prediction error, for example the difference between the predicted block of pixels and the original block of pixels, may be coded. This may be done based on transforming the difference in pixel values using a transform, such as for example discrete cosine transform (DCT) or a variant of DCT, quantizing the coefficients, and entropy coding the quantized coefficients. By varying the fidelity of the quantization process, encoder can control the balance between the accuracy of the pixel representation (picture quality) and size of the resulting coded video representation (file size or transmission bitrate).

Inter prediction, which may also be referred to as temporal prediction, motion compensation, or motion-compensated prediction, exploits temporal redundancy. In inter prediction the sources of prediction are previously decoded pictures.

Intra prediction utilizes the fact that adjacent pixels within the same picture are likely to be correlated. Intra prediction can be performed in spatial or transform domain, which means that either sample values or transform coefficients can be predicted. Intra prediction may be exploited in intra coding, where no inter prediction is applied.

One outcome of the coding procedure may comprise a set of coding parameters, such as motion vectors and quantized transform coefficients. Many parameters can be entropy-coded more efficiently if they are predicted first from spatially or temporally neighbouring parameters. For example, a motion vector may be predicted from spatially adjacent motion vectors and the difference relative to the motion vector predictor may be coded. Prediction of coding parameters and intra prediction may be collectively referred to as in-picture prediction.

A video decoder may reconstruct the output video based on prediction means similar to the encoder to form a predicted representation of the pixel blocks. Reconstruction may be based on motion or spatial information created by the encoder and stored in the compressed representation and prediction error decoding, which may comprise an inverse operation of the prediction error coding to recover the quantized prediction error signal in spatial pixel domain. After applying prediction and prediction error decoding means the decoder may sum up the prediction and prediction error signals, for example pixel values, to form the output video frame. The decoder, and also the encoder, can also apply additional filtering means to improve the quality of the output video before passing it for display and/or storing it as prediction reference for the forthcoming frames in the video sequence.

In video codecs the motion information may be indicated with motion vectors associated with each motion compensated image block. Each of these motion vectors represents displacement of the image block in the picture to be coded or decoded and the prediction source block in one of the previously coded or decoded pictures. In order to represent motion vectors efficiently, the motion vectors may be coded differentially with respect to block specific predicted motion vectors. The predicted motion vectors may be created in a predefined way, for example based on calculating a median of encoded or decoded motion vectors of an adjacent blocks.

Another way to create motion vector predictions may comprise generating a list of candidate predictions from adjacent blocks and/or co-located blocks in temporal reference pictures and signalling the chosen candidate as the motion vector predictor. In addition to predicting the motion vector values, the reference index of previously coded or decoded picture can be predicted. The reference index may be predicted from adjacent blocks and/or or co-located blocks in temporal reference picture.

Moreover, high efficiency video codecs may employ an additional motion information coding or decoding mechanism, often called merging/merge mode, where motion field information, comprising motion vector and corresponding reference picture index for each available reference picture list, is predicted and used without any modification/correction. Similarly, predicting the motion field information may be carried out based on using the motion field information of adjacent blocks and/or co-located blocks in temporal reference pictures and the used motion field information may be signalled among a list of motion field candidate list filled with motion field information of available adjacent/co-located blocks.

The prediction residual after motion compensation may be first transformed with a transform kernel, for example DCT, and then coded. One reason for this is that often there still exists some correlation among the residual and applying the transform may reduce this correlation and enable to provide more efficient coding.

Video encoders may utilize Lagrangian cost functions to find optimal coding modes, for example the desired macroblock mode and associated motion vectors. This kind of cost function may use a weighting factor λ to tie together the (exact or estimated) image distortion due to lossy coding methods and the (exact or estimated) amount of information that is required to represent the pixel values in an image area: *C* = *D* + *λR,* where C is the Lagrangian cost to be minimized, *D* is the image distortion, for example mean squared error (MSE) with the mode and motion vectors considered, and *R* is the number of bits needed to represent the required data to reconstruct the image block in the decoder (including the amount of data to represent the candidate motion vectors).

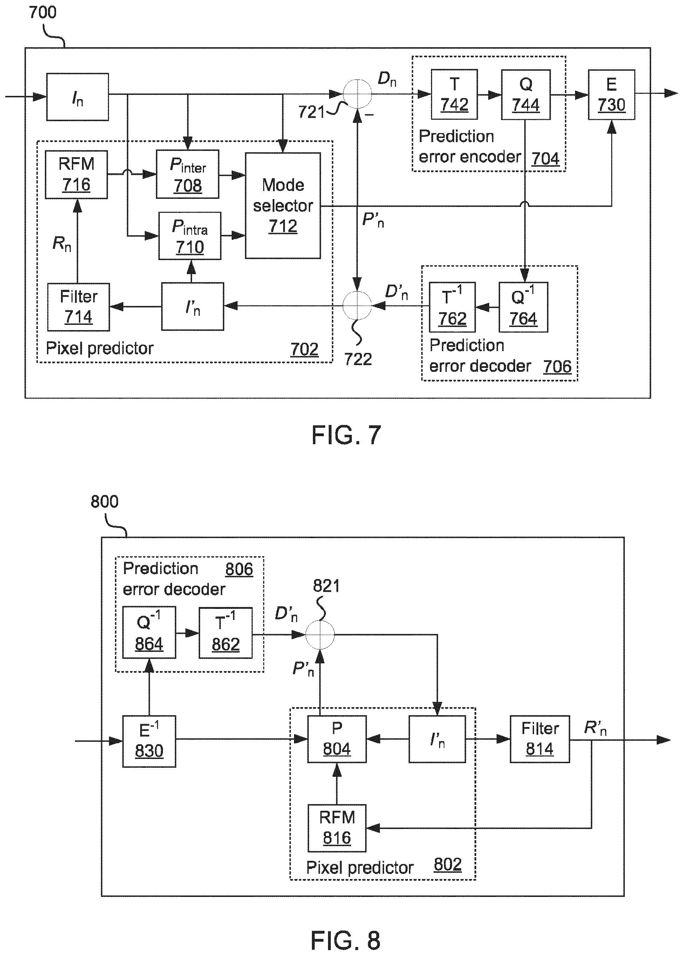

FIG. 7 illustrates an example of a video encoder, according to an example embodiment. The encoder 311 of FIG. 3 may comprise an algorithmic video encoder such as for example video encoder 700. The video encoder 700 may comprise a pixel predictor 702, a prediction error encoder 704, and/or prediction error decoder 706. The pixel predictor 702 may comprise an inter-predictor 708, an intra-predictor 710, a mode selector 712, a filter 714, and/or a reference frame memory (RFM) 716. The pixel predictor 702 may receive a plurality of images or video frames, for example image *I*ₙ, for encoding at the inter-predictor 708 and the intra-predictor 710. The inter-predictor 708 may determine a difference between an image *I*ₙ and a motion compensated reference frame obtained from the reference frame memory 716. The intra-predictor 710 may determine a prediction for an image block based on the already processed parts of the current image. The output of both the inter-predictor 708 and the intra-predictor 710 may be provided to the mode selector 712. Intra-prediction may be performed in multiple modes and the predicted signals may be provided to the mode selector 712. The mode selector 712 may also receive a copy of the image *I*ₙ.

Depending on selection of encoding mode for the current block, the output of the inter-predictor 708, the output of one of the optional intra-predictor modes, or an output of a surface encoder within the mode selector 712 may be provided as an output *P*'ₙ of the mode selector 712. The output of the mode selector 712 may be provided to a first summing device 721. The first summing device 721 may subtract the output of the pixel predictor 702, from the image *I*₀ to obtain a first prediction error signal *D*ₙ which may be input to the prediction error encoder 704.

The pixel predictor 702 may further receive, for example from a second summing device 722 acting as a preliminary reconstructor, a combination of the prediction representation of the image block *P*'ₙ and the output *D*'ₙ of the prediction error decoder 706. The preliminary reconstructed image *I*'_{N} may be provided to the intra-predictor 710 and to a filter 714. The filter 714 may filter the preliminary reconstructed image *I*'_{N} and output a final reconstructed image *R*_{N}, which may be saved in the reference frame memory 716. The reference frame memory 716 may be connected to the inter-predictor 708 such that the reconstructed image *R*_{N} may be used as a reference image to which a future video frame is compared at inter-predictor 708.

The prediction error encoder 704 may comprise a transform unit 742 and a quantizer 744. The transform unit 742 may be configured to transform the prediction error signal *D*_{N} to a transform domain. The transform may comprise a discrete cosine transform (DCT). The quantizer 744 may be configured to quantize the transform domain signal, for example DCT coefficients, to output quantized coefficients.

The prediction error decoder 706 may receive the output from the prediction error encoder 704 and perform operations opposite to the prediction error encoder 704 to produce a decoded prediction error signal *D'*_{N} as an output of the prediction error decoder 706. The decoded prediction error signal *D*'_{N} may be combined with the prediction representation of the image block *P*'_{N} at the second summing device 722, to produce the preliminary reconstructed image *I*'_{N}. The prediction error decoder 706 may comprise a dequantizer 764, which may be configured to dequantize the quantized coefficient values, for example DCT coefficients, to reconstruct the transform domain signal. The prediction error decoder may further comprise an inverse transform unit 762, which may be configured to perform the inverse transformation to the reconstructed transform domain signal. The output of the inverse transform unit 762 may contain reconstructed block(s) of an image. The prediction error decoder 706 may further comprise a block filter, which may be configured to filter the reconstructed block(s) according to further decoded information and filter parameters.

The entropy encoder 730 may receive the output of the prediction error encoder 703 and may perform entropy encoding or variable length encoding on the output of the prediction error coder 704. Entropy coding or decoding may be performed in many ways. For example, context-based coding or decoding may be applied, where both the encoder and the decoder may modify a context state of a coding parameter based on previously coded or decoded coding parameters. Context-based coding may for example comprise context adaptive binary arithmetic coding (CABAC), context-based variable length coding (CAVLC), or any similar entropy coding. Entropy coding or decoding may alternatively or additionally be performed using a variable length coding scheme, such as Huffman coding or decoding, or, Exp-Golomb coding or decoding. Decoding of coding parameters from an entropy-coded bitstream or codewords may be referred to as parsing.

FIG. 8 illustrates an example of a video decoder, according to an example embodiment. The decoder 321 of FIG. 3 may comprise an algorithmic video decoder such as for example video decoder 800. The video decoder 800 may comprise a pixel predictor 802 and a prediction error decoder 806. The encoded video data may be received at an entropy decoder 830, which may provide the entropy decoded video data to the prediction error decoder 806. The prediction error decoder 806 may comprise a dequantizer 864, which may be configured to dequantize the quantized coefficient values of the entropy decoded data to reconstruct a transform domain signal, similar to dequantizer 764 at the encoder side. The prediction error decoder 806 may further comprise an inverse transform unit 862, which may be configured to perform the inverse transformation to the reconstructed transform domain signal to obtain a decoded prediction error signal *D'*_{N}. The decoded prediction error signal *D'*_{N} may be combined with a prediction representation of an image block *P'*_{N} at a summing device 821 to obtain a preliminary reconstructed image *I'*_{N}. Filter 814 may filter the preliminary reconstructed image *I'*_{N} and output a reconstructed image *R'*_{N}, which may be provided as an output of the video decoder 800 and also saved in the reference frame memory 816 for prediction of future video frames at predictor 804, which may operate as an intra-predictor or an inter-predictor.

Even though FIG. 7 and FIG. 8 illustrate a single layer encoder and a single-layer decoder, it is understood that example embodiments may be applied also for scalable video coding, where the encoded video data may comprise a base layer and one or more enhancement layers for providing different levels of quality. Furthermore, example embodiments may be applied for two-dimensional video content or volumetric video content such as for example spatial video content associated with virtual reality applications.

Neural networks may be used in image and video compression, either to perform the whole compression or decompression process or to perform some steps of the compression or decompression process. When the encoder neural network is used for some step(s), an encoder neural network may be for example configured to perform a step which takes as an input a decorrelated version of the input data, for example an output of a transform such as for example Fourier transform or discrete cosine transform (DCT). The encoder neural network may be for example configured to perform one of the last steps of the encoding process. The encoder neural network may be followed by one or more post-processing steps such as for example binarization, quantization, and/or an arithmetic encoding step, for example a lossless encoder such as an entropy encoder. The decoder neural network may be located at a corresponding position at the decoder and be configured to perform a corresponding inverse function.

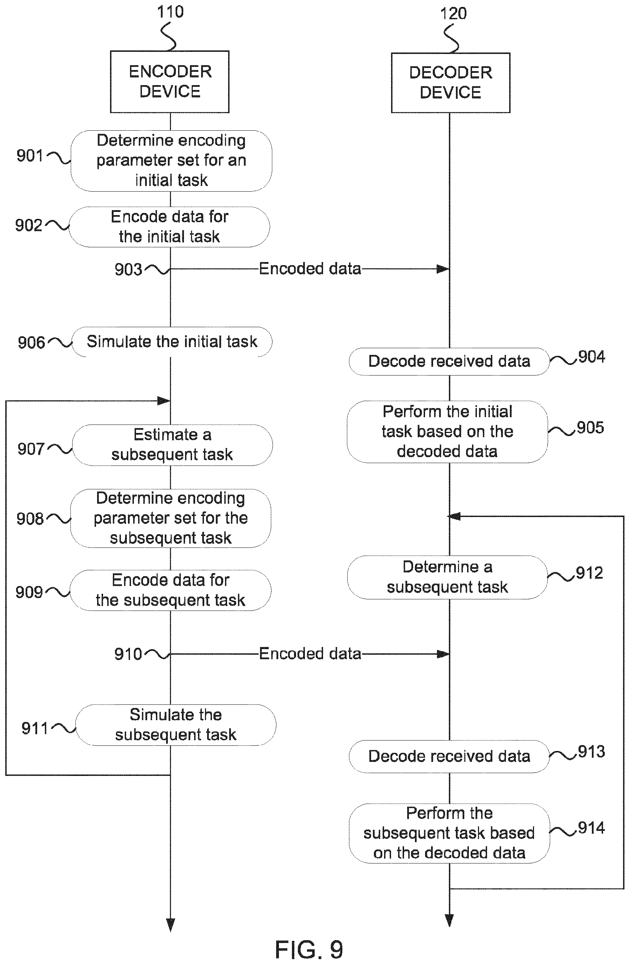

FIG. 9 illustrates an example of encoding and decoding data for dynamic task switching with task simulation at an encoder device, according to an example embodiment. Encoder device 110 may be configured to dynamically encode data based on tasks to be performed on the encoded data and the decoder device 120 may be configured to decode the data encoded by encode device 110 and use the decoded data as input for one or more functions, such as for example machine learning functions. For example, decoder device 120 may be configured to switch between different functions and therefore the encoder device 110 may encode data with different encoding parameters to improve performance of the dynamically switched functions at the decoder device 120.

Encoder device 110 may initially receive a request for encoding data for a particular task. The task may be associated with a particular machine learning function, non-ML function, or a user related function, as discussed in connection with FIG. 3. The request for encoding the data may be received from decoder device 120, or from controller 312 of the encoder device 110. The request may include an identifier of the data, for example a video file, and/or the task or a type of the task for which the data is to be encoded.

At 901, the encoder device 110 may determine an initial encoding parameter set based on at least one initial task associated with the data subject to encoding. The at least one initial task may comprise a plurality of initial tasks. As discussed above, determining the encoding parameter set may be based on the task of a type of the task to be performed on the data. The encoder device 110 may for example comprise a look-up table or other suitable data structure for associating different tasks or types of tasks to different quality levels, or directly to different encoding parameter sets. A quality level may be An encoding parameter set may comprise one encoding parameter or a plurality of encoding parameters or value(s) of the encoding parameter(s). It is noted that even though the task is here referred to as an initial task, one or more preceding tasks may have been performed before the initial task.

The initial encoding parameter set may be used to encode data at a base quality base quality level such that the "kernel" or "basic" analysis steps, such as for example object detection and classification, can be performed. Subsequently, the encoder device 110 may encode additional quality levels for at least a portion of the data dependent on the output of the basic analysis steps, as will be further described below.

The initial encoding parameter set may be determined to achieve a quality level associated with the initial task. Encoding quality may be controlled for example based on one or more of the following parameters:
Bitrate. For example, higher quality is achievable by encoding data using a higher bitrate

Quantization parameter (QP) . For example, a higher quality may be achieved based on applying a lower quantization parameter, e.g., a lower quantization step size for transform coefficient quantization.

Spatial resolution. For example, higher quality may be achieved based on encoding image or video data with higher spatial resolution, i.e., with higher amount of samples within a spatial region.

Temporal resolution. For example, higher quality may be achieved based on encoding video data and/or audio data with higher temporal resolution, e.g., with higher number of video frames or audio samples within a time period.

Bit-depth. For example, higher quality may be achieved based on encoding image, video, or audio data with higher amount of bits. For example, video frames may be encoded with bit-depth of 10 or 12 bits to adjust the quality level.

Dynamic range. For example, quality level may be adjusted by applying different dynamic range and/or by obtaining images using a different tone mapping function and/or a different optical transfer function.

Chroma format. For example, higher quality may be achieved based on using a higher spatial resolution in chroma format, e.g., encoding with chroma format 4:4:4 instead of 4:2:0.

Color gamut. For example, higher quality may be achieved based on applying a richer/broader color representation range. For example, UHDTV (ITU-R BT.2020) color gamut may be used instead of ITU-R BT.709 color gamut.

In general, a set of parameter values for at least one of the above parameters may be determined to obtain a desired quality level for the task(s) in question. An association between a certain function, e.g. a machine, and a desired quality level may be inferred, for example, according to predefined rules such as for example a look-up table, or, based on an algorithm learned from data such as for example a neural network. According to an example embodiment, an association between a quality level and a function type, for example a machine type, may be inferred. Machine type may comprise a general description of the machine, e.g. type of a machine learning function such as "object classifier", instead of a more specific description of such as for example "ResNet50 architecture trained on ImageNet".

At 902, the encoder device 110 may encode the data based on the initial encoding parameter set determined based on the initial task. The data may be encoded using a neural video encoder such as for example encoder network 611 or an algorithmic video encoder such as for example video encoder 700.

At 903, the encoder device 110 may transmit encoded data, for example the data encoded based on the initial encoding parameter set, to the decoder device 120. The encoded data may be transmitted for example in a video stream over a communication interface. Alternatively, the data may be stored at a memory of encoder device 110 or an external memory, for example as a video file, such that decoder device 120 may retrieve the encoded data from the memory. The encoded data may be transmitted or stored such that it is accessible to one or more devices, where one of the devices may comprise decoder device 120. Transmission or storing of the encoded data may comprise transmitting or storing also metadata that enables decoding the encoded data. The metadata may comprise an encoding or decoding parameter set, for example the initial encoding parameter set.

The decoder device 120 may receive the encoded data, for example the data encoded based on the initial encoding parameter set. As discussed above, the initial encoding parameter set may be associated with the initial task. The data may be received from the encoder device 110 over a communication interface, for example as a video stream, or from a memory, for example as a video file.

At 904, the decoder device 120 may decode the received data. The data may be decoded for example using a neural video decoder such as for example decoder network 621 or an algorithmic video decoder such as for example video decoder 800.

At 905, the decoder device 120 may perform, or cause performance of, the initial task based on the decoded data. For example, the decoder 120 may perform the initial task using one of the functions 324, 325, 326 residing internally at decoder device 120. Alternatively, the decoder device 120 may cause performance of the initial task based on transmitting a request to perform the initial task to another device, for example a server comprising one or more of functions 324, 325, 326.

At 906, the encoder device 110 may simulate the initial task. Simulating a task may comprise causing performance of the task at one of the functions 314, 315, 316. The encoder device 110 may perform the task itself or transmit a request to perform the task to another device, for example a server. The request may comprise an identification of the task. Furthermore, the encoder device 110 may transmit the encoded data to the other device. The encoder device 110 may obtain a simulation result, for example by performing the task itself or by receiving the simulation result from the other device. The simulation result may comprise an output of the task.

For example, for object detection the simulation result may comprise a spatial or spatio-temporal location of an object in image or video data and/or a classification of the object. A spatio-temporal location in video data may comprise spatial region(s) during a plurality of video frames. For example, spatio-temporal location may be expressed as coordinates, e.g. [TopLeftCoordinate, BottomRightCoordinate], within a range of video frames, e.g. from frame N to frame N+P. A result of object classification may comprise a class of the detected object, such as for example a person or a vehicle.

At 907, the encoder device 110 may be configured to estimate at least one subsequent task. The at least one subsequent task may comprise a plurality of subsequent tasks. The subsequent task may be estimated based on simulation of at least one previous task. The at least one previous task may comprise a plurality of previous tasks. The encoder device 110 may not know in advance, which tasks the decoder device 120 is interested in. This uncertainty may be for example due to differences in orchestrator subsystems, for example controllers 312, 322 and/or task control data 313, 323. However, the encoder device 110 may be configured to predict a pattern of task switching at the decoder device 120. For example, the encoder may store, or have access to, one or more sequences of tasks. Since the subsequent task may not be known before performing or simulating the previous task, also the desired quality level may not be known at the time of determining encoding parameters for the previous task. Furthermore, some of the previously encoded data may be irrelevant for the subsequent task.

According to an example embodiment, estimating the at least one subsequent task may be based on simulation of a plurality of previous tasks. Simulation of the plurality of previous tasks may be based on the at least one portion of the data encoded with a previous encoding parameter set or a plurality of previous encoding parameter sets. For example, encoder device 110 may simulate the plurality of previous tasks based on a video portion encoded with a single encoding parameter set. Alternatively, the encoder device 110 may simulate the plurality of previous tasks based on the video portion encoded with different encoding parameter sets such that different previous tasks are simulated with the video portion having different quality. The plurality of previous tasks may be also performed with a plurality of data portions, for example spatio-temporal video regions, where the plurality of data portions may be encoded with same or different encoding parameter sets.

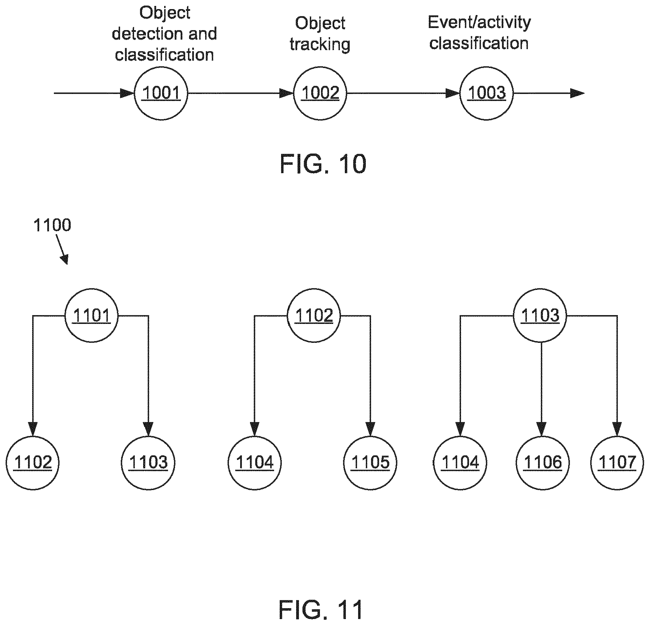

FIG. 10 illustrates an example of a sequence of tasks, according to an example embodiment. The sequence of tasks may comprise object detection and classification 1001 as an initial task, and object tracking 1002 and event or activity classification 1003 as first and second subsequent tasks. For example, a detected object may be classified as a person at 1001 and location of the person the video data may be tracked at 1002. Finally, an event or activity associated with the tracked person may be classified at 1003. In this example, the sequence provides a single line of tasks, where a subsequent task may be performed based on output of a previous task. In general, a sequence of tasks may comprise a of two or more tasks performed or to be performed sequentially.

Different tasks may be associated with different qualities of data. For example, video data encoded with a first quality may be used as an input to object detection and classification 1001. The video data with the first quality may be also sufficient for performing object tracking 1002. The object tracking task may be performed in response to detecting and classifying an object in the data encoded with the first quality. The object tracking 1002 may be performed based on the output of the object detection 1001, for example based on an initial location of the object. The event or activity classification 1003 may be for example performed in response to detecting the object to belong to the class of persons. Event or activity classification 1003 may be performed based on data encoded at a second quality. The second quality may be higher than the first quality. The data encoded at the second quality may be requested and/or received from the encoder device 110 or a memory device. The decoder device 120 may decode the data encoded with the second quality and perform person recognition based on the decoded data.

Further tasks may include detecting and/or recognizing an action by a person, relation analysis between interacting persons or other parties, language understanding, and/ cause-effect analysis. Performing the different tasks may require different quality level. For example, object detection may require a relatively low quality of data, whereas a cause-effect analysis may require a higher quality of data.

FIG. 11 illustrates an example of a data structure 1100 for estimating or determining a sequence of tasks, according to an example embodiment. The data structure may comprise a plurality of tasks, for example tasks 1101, 1102, 1103, which may be associated with one or more candidate subsequent tasks. For example, task 1101 may be associated with candidate subsequent tasks 1102 and 1103, task 1102 may be associated with candidate subsequent tasks 1104 and 1105, and/or task 1103 may be associated with candidate subsequent tasks 1104, 1106, and 1107. Furthermore, task 1102 and 1103 may be candidate subsequent tasks for task 1101.

Tasks may be associated with a quality level or an encoding parameter set. Such association may be stored at encoder device 110 and/or decoder device 120 or received from another device, for example as a look-up table or other data structure comprising a mapping between a task and a quality level, or, between a task and an encoding parameter set.

A subsequent task may be selected from multiple candidate tasks based on performing or simulating a previous task. Selecting a subsequent task may be based on an identity of the previous task or a type of the previous task, and/or, an output of the previous task and one or more criteria associated with the output of the previous task. Based on the data structure 1100, or any other suitable data structure, a hierarchical pattern of tasks may be determined or estimated. A sequence of tasks to be performed may be determined or estimated dynamically, for example one task at a time, such that selections of subsequent tasks within the hierarchical task pattern form the sequence of tasks.

According to an example embodiment, the sequence of tasks may be determined by a machine learning model such as for example a neural network. A task estimation network may be trained for example by using outputs of multiple tasks as input data and a desired sequence of tasks, such as for example provided by the example embodiments of FIG. 10 or FIG. 11, as ground-truth data. After training the task estimation network may be configured to dynamically estimate one or more subsequent tasks based on performance or simulation of a previous task.

At 908, the encoder device 110 may determine at least one subsequent encoding parameter set based on the subsequent task in the sequence of tasks associated with the data. The subsequent encoding parameter set may be determined based on the quality level associated with the subsequent task.

At 909, the encoder device 110 may encode data, for example at least one portion of the data, for the subsequent task. The at least one portion of the data may comprise a plurality of data portions. The encoder device 110 may encode the same data as encoded in 902, or a portion of the data encoded at 902. The encoding operation may be performed similar to operation 902, for example based on using neural or algorithmic video encoders. Encoding the data for the subsequent task may be based on the subsequent encoding parameter set.

According to an example embodiment, the encoder device 110 may determine the portion of the data to be encoded based on simulation of a previous task, for example the simulation of the initial task at 906. If the data comprises an image, the portion of the data may comprise a spatial region of the image. If the data comprises a plurality of video frames, the portion of the data may comprise at least one temporal or spatio-temporal region of the plurality of video frames.

For example, if an object is detected in the data, the portion of the data may be determined based on a spatial or spatio-temporal location of the detected object. A portion of video data may be for example determined such that an object appears in the portion of video data, for example for a predetermined time or number of video frames.

According to an example embodiment, determining the at least one portion of the data may be based on simulation of a plurality of previous tasks. Simulation of the plurality of previous tasks may be based on data encoded with a previous encoding data set or data encoded with a plurality of previous encoding parameter sets. For example, encoder device 110 may simulate the plurality of previous tasks based on data encoded with a single encoding parameter set. Alternatively, the encoder device 110 may simulate the plurality of previous tasks with data encoded based on different encoding parameter sets, for example to have different data quality for the plurality of previous tasks. The encoder device 110 may determine the at least one portion of the data for example based on an output of a latest task of the plurality of previous tasks.

According to an example embodiment, the portion of the video data for the subsequent task may be encoded as an enhancement layer of a scalable video stream. The data for the previous task, for example the initial task, may be encoded as a base layer of the scalable video stream. The data for the previous task may be alternatively decoded as another enhancement layer on top of data encoded for a task preceding the previous task.

As an example of quality and/or enhancement layer specific tasks for analyzing data, the following tasks may be associated with different quality levels. Data associated with the different quality levels may be for example provided as a scalable media stream, which may comprise a base layer and one or more enhancement layers:

A first quality and/or base layer may be sufficient for certain, rather simple tasks, such as object proposal.

A second quality or a first enhancement layer may be sufficient for object recognition.

A third quality and/or a second enhancement layer may be sufficient for semantic segmentation.

A fourth quality and/or a third enhancement layer may be sufficient for image labeling, e.g., generating a natural language description of the content of the image.

A fifth quality and/or a fourth enhancement layer may be sufficient for determining inter-object relations.

A sixth quality and/or a fifth enhancement layer may be sufficient for predicting the future based on the content of the current image(s).

A quality level and/or a layer of the scalable media stream may be associated with signaling information about which task(s) it enables.

At 910, the encoder device 110 may provide the data encoded for the subsequent task to the decoder device 120, similar to operation 903. For example, the encoder device 110 may transmit the portion of the data encoded based on the subsequent encoding parameter set to the decoder device 120.

At, 911 the encoder device 110 may perform simulation of the subsequent task, for example based on the data encoded with the subsequent encoding parameter set. Simulation of the subsequent task may be performed similar to operation 906.

After 911, the encoder device 110 may move back to operation 907 to determine another subsequent task based on the simulation at 911. The encoder device 110 may iterate operations 907 to 911 until reaching an end of the sequence of tasks. As a result, the encoder device 110 may determine a plurality of subsequent encoding parameter sets corresponding to a plurality of subsequent tasks in the sequence of tasks.

At 912, the decoder device 120 may determine a subsequent task. The subsequent task may be determined based on performance of at least one previous task, for example the performance of the initial task at 905. Similar to operation 907, determining a subsequent task may be determined based on an identity of the previous task(s) or type(s) of the previous task(s), and/or, an output of the previous task(s) and one or more criteria associated with the output(s) of the previous task(s). The decoder device 120 may store, or have access to, one or more sequences of tasks or at least one data structure enabling to form a sequence of task, such as for example illustrated in FIG. 10 and FIG. 11.

Meanwhile the encoder device 110 may have determined (or estimated) the subsequent task and encoded at least a portion of the data for the subsequent task based on the determined subsequent encoding parameter set. The decoder device 120 may then receive at least a portion of the data encoded based on the subsequent encoding parameter set associated with the subsequent task.

At 913, the decoder device 120 may decode the received data, for example the at least one portion of the data.

At 914, the decoder device 120 may perform, or cause performance of, the subsequent task based on the decoded portion(s) of data, similar to operation 905. If the simulation 906 of the initial task, or in general at least one previous task, at encoder device 110 provides a sufficiently similar result as the actual performance of the initial task at 905, the decoder device 120 is able to successfully perform the subsequent task based on the data decoded at 914.

After 914, the decoder device 120 may move back to operation 907 to determine another subsequent task based on the performance of the subsequent task at 914. The decoder device 120 may iterate operations 912 to 914 until reaching an end of the sequence of tasks. As a result, the decoder device 120 may receive data encoded based on a plurality of subsequent encoding parameter sets corresponding to a plurality of subsequent tasks in a sequence of tasks. Furthermore, the decoder device 120 may decode the data encoded based on the plurality of subsequent encoding parameter sets and cause performance the plurality of subsequent tasks in the sequence of tasks.

Even though operations have been illustrated in FIG. 9 in a certain order, it is understood that the process may be varied for example by performing one or more of the operations in a different order, or omitting one or more operations. For example, the encoder may initiate simulating the initial task (operation 906), before providing the encoded data to the decoder 120 (operation 903). Furthermore, the encoder device 110 may estimate a plurality of subsequent tasks and/or determine a plurality of subsequent encoding parameter sets before encoding data and/or providing the encoded data to the decoder device 120 (operations 909 or 910).

The example embodiment of FIG. 9 enables to encode and decode data for dynamic task switching. Estimating a subsequent task at the encoder device 110 enables to reduce delay, because encoding data for the subsequent task may be initiated at the encoder device 110 independent of the operations at the decoder device 120. Estimating the subsequent task may be based on simulating the previous task with a function, for example a neural network, that is less complex than the function used for performing the actual task after decoding.

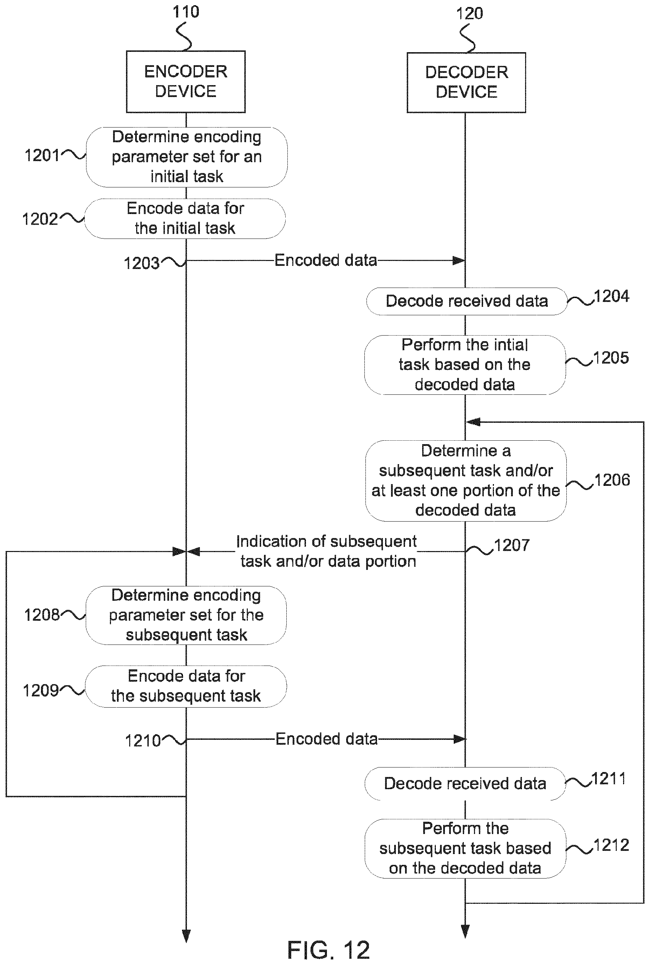

FIG. 12 illustrates an example of encoding and decoding data for dynamic task switching without task simulation at an encoder device, according to an example embodiment.

At 1201, the encoder device 110 may determine an initial encoding parameter set, similar to operation 901.

At 1202, the encoder device 110 may encode data for the initial task based on the initial encoding parameter set, similar to operation 902.

At 1203, the encoder device 110 may transmit or store the encoded data, similar to operation 903. The decoder device 120 may received the encoded data or retrieve the encoded data from a memory device.

At 1204, the decoder device 120 may decode the received data, similar to operation 904.

At 1205, the decoder device 120 may perform the initial task, similar to operation 905.

At 1206, the decoder device 120 may determine at least one subsequent task, similar to operation 912. Determining the subsequent task may be based on performance of the at least one initial task, or in general one or a plurality of previous tasks. The decoder device 120 may further determine at least a portion of the decoded data relevant for the subsequent task. Determining the portion of the data may be based on performance of the initial task at 1205, or, in general base on a previous task, a type of previous task, and/or an output of the previous task. The portion of the decoded data may be determined in order to request a corresponding portion to be encoded with a quality level associated with the subsequent task. It is also possible that the detected object covers majority of the decoded data. In such a case, for example, the decoder device 120 may determine that it is desired to receive all of the data with the appropriate quality for the subsequent task.

According to an example embodiment, the decoder device 120 may determine the portion of the data based on a spatial or spatio-temporal location of a detected object. For example, if the decoded data comprises an image, the portion of the data may comprise a spatial region of the image. If the decoded data comprises a plurality of video frames, the portion of the data may comprise at least one temporal or spatio-temporal region of the plurality of video frames. For example, if an object is detected in the decoded data, the portion of the decoded data may be determined based on a spatial or spatio-temporal location of the detected object. A portion of decoded video data may be for example determined such that an object appears in the portion of decoded video data, for example for a predetermined time or number of video frames.

According to an example embodiment, determining the at least one subsequent task may be based on performance of a plurality of previous tasks. Performance of the plurality of previous tasks may be based on the at least one portion of the data encoded with a previous encoding parameter set or a plurality of previous encoding parameter sets. For example, decoder device 120 may perform the plurality of previous tasks based on a video portion encoded with a single encoding parameter set. Alternatively, the decoder device 120 may perform the plurality of previous tasks based on the video portion encoded with different encoding parameter sets such that different previous tasks are performed with the video portion having different quality. The plurality of previous tasks may be also performed with a plurality of data portions, for example spatio-temporal video regions, where the plurality of data portions may be encoded with same or different encoding parameter sets.

According to an example embodiment, determining the at least one portion of the data may be based on performance of a plurality of previous tasks. Performance of the plurality of previous tasks may be based on data encoded with a previous encoding data set or data encoded with a plurality of previous encoding parameter sets. For example, decoder device 120 may perform the plurality of previous tasks based on data encoded with a single encoding parameter set. Alternatively, the decoder device 120 may perform the plurality of previous tasks encoded based on data encoded with different encoding parameters sets, for example to have different data quality for the plurality of previous tasks. The decoder device 120 may determine the at least one portion of the data for example based on an output of a latest task of the plurality of previous tasks.

At 1207, the decoder device 120 may transmit an indication of the at least one subsequent task to the encoder device 110. The indication may comprise at least one task identifier and/or at least one type of task. For example, the decoder device 120 may indicate whether the type of task is machine learning task, a non-ML task, and/or a user output task. The decoder device 120 may for example indicate whether the data subject to quality improvement is requested to be encoded also for human-understanding, e.g. for good human perception quality. The indication may comprise a request for encoding data for the subsequent task. For example, the decoder device 120 may request the encoder device 110 to to encode additional quality levels in consequence of certain output(s) of the previous task performed one the decoded data. Alternatively, or additionally, the decoder device 120 may determine and/or transmit, to the encoder device 110, an encoding parameter set for encoding data for the subsequent task. Alternatively, or additionally, the decoder device 120 may determine and/or transmit an indication of a quality level for encoding data for the subsequent task.

The decoder device 120 may transmit an indication of the portion of the data, for example to the encoder device 110. The indication may for example comprise spatial, temporal, or spatio-temporal parameters that define the portion of the data. The parameters may for example comprise at least one of: one or more spatial coordinates, one or more time periods, one or more video frames or audio samples, one or more ranges of video frames or audio samples, or the like. The encoder device 110 may receive the indication of the subsequent task and/or the indication of the data, or portion of the data, for example from the decoder device 120. Alternatively, the decoder device 120 may transmit an indication that all of the data, for example an entire image, audio, or video file, is requested for performing the subsequent task.

The indication of the subsequent task and the indication of the data, or portion of the data, may be included in a single control message or transmitted as separate control messages. Any suitable control or signaling messages may be used.

At 1208, the encoder device 110 may determine at least one subsequent encoding parameter set based on the subsequent task. For example, the subsequent encoding parameter set may be determined based on a quality level associated with the subsequent task. The subsequent encoding parameter set may be determined in response to receiving an indication of the subsequent task and/or an indication of a quality level associated with the subsequent task, for example from the decoder device 120. The encoding parameter set for the subsequent task may be determined similar to operation 908.

At 1209, the encoder device 110 may encode at least the portion of the data for the subsequent task, similar to operation 909.

At 1210, the encoder device 110 may provide the encoded data to the decoder device 120, similar to operation 910. The decoder device 120 may receive the encoded data, for example from encoder device 110 or a memory device.

After 1210, the encoder device 110 receive an indication of another subsequent task and/or at least a portion of data and move back to operation 1208 to determine another set of subsequent encoding parameters. The encoder device 110 may iterate operations receiving the indication(s) and operations 1208, 1209, 1210 until not receiving an indication of a subsequent task from the decoder device 120. As a result, the encoder device 110 may determine a plurality of subsequent encoding parameter sets corresponding to a plurality of subsequent tasks indicated by decoder device 120.

At 1211, the decoder device 120 may decode the received data, similar to operation 913.

At 1212, the decoder device 120 may perform, or cause performance of, the subsequent task, similar to operation 914.

After 1212, the decoder device 120 may move back to operation 912 to determine another subsequent task and/or at least a portion of the data. The decoder device 120 may iterate operations 1206, 1207, 1211, and 1212 until reaching an end of the sequence of tasks. As a result, the decoder device 120 may receive data encoded based on a plurality of subsequent encoding parameter sets corresponding to a plurality of subsequent tasks in a sequence of tasks. Furthermore, the decoder device 120 may decode the data encoded based on the plurality of subsequent encoding parameter sets and cause performance the plurality of subsequent tasks in the sequence of tasks.

Even though operations have been illustrated in FIG. 12 in a certain order, it is understood that the process may be varied for example by performing one or more of the operations in a different order, or omitting one or more operations. For example, the decoder device 120 may determine a plurality of subsequent tasks and/or data portions and to send indications of the plurality of subsequent tasks and/or data portions at operation 1207.

The example embodiment of FIG. 12 enables encoding and decoding data for dynamic task switching without performing or simulating the tasks at the encoder device 110. Complexity of the encoder device 110 is thereby reduced.

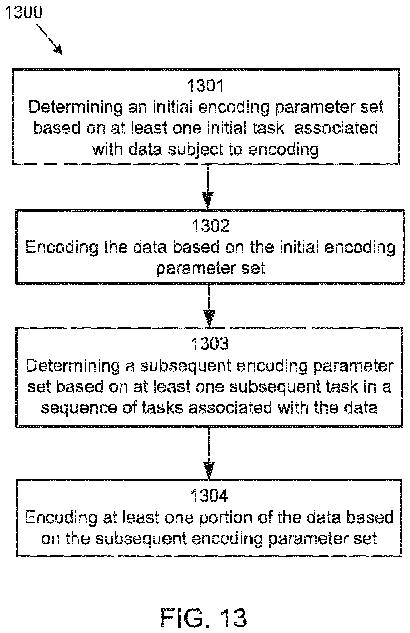

FIG. 13 illustrates an example of a method 1300 for encoding data for dynamic task switching, according to an example embodiment.

At 1301, the method may comprise determining an initial encoding parameter set based on at least one initial task associated with data subject to encoding.

At 1302, the method may comprise encoding the data based on the initial encoding parameter set.

At 1303, the method may comprise determining a subsequent encoding parameter set based on at least one subsequent task in a sequence of tasks associated with the data.

At 1304, the method may comprise encoding at least one portion of the data based on the subsequent encoding parameter set.

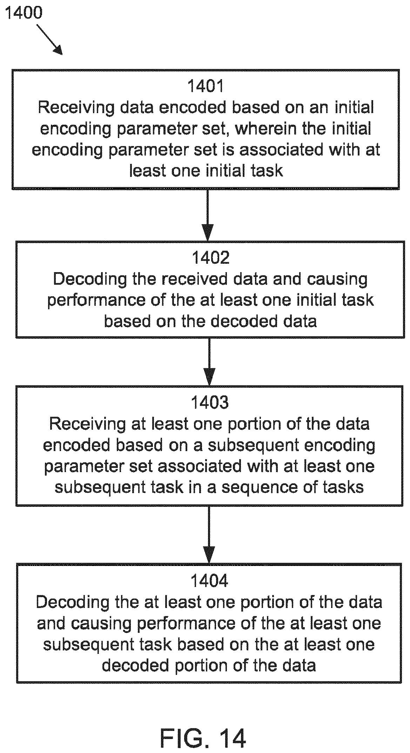

FIG. 14 illustrates an example of a method 1400 for decoding data for dynamic task switching, according to an example embodiment.

At 1401, the method may comprise receiving data encoded based on an initial encoding parameter set, wherein the initial encoding parameter set is associated with at least one initial task.

At 1402, the method may comprise decoding the received data and causing performance of the at least one initial task based on the decoded data.

At 1403, the method may comprise receiving at least one portion of the data encoded based on a subsequent encoding parameter set associated with at least one subsequent task in a sequence of tasks.

At 1404, the method may comprise decoding the at least one portion of the data and causing performance of the at least one subsequent task based on the at least one decoded portion of the data.

Further features of the methods directly result from the functionalities and parameters of the encoder device 110 and/or the decoder device 120, as described in the appended claims and throughout the specification, and are therefore not repeated here. It is noted that one or more steps of the method may be performed in different order.

An apparatus, for example encoder device 110 or decoder device 120 may be configured to perform or cause performance of any aspect of the method(s) described herein. Further, a computer program may comprise instructions for causing, when executed, an apparatus to perform any aspect of the method(s) described herein. Further, an apparatus may comprise means for performing any aspect of the method(s) described herein. According to an example embodiment, the means comprises at least one processor, and memory including program code, the at one memory and the program code configured to, when executed by the at least one processor, cause performance of any aspect of the method(s).

Any range or device value given herein may be extended or altered without losing the effect sought. Also, any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps or operations of the methods described herein may be carried out in any suitable order, or simultaneously where appropriate. Additionally, individual blocks may be deleted from any of the methods without departing from the scope of the subject matter described herein. Aspects of any of the embodiments described above may be combined with aspects of any of the other embodiments described to form further embodiments without losing the effect sought.

The term 'comprising' is used herein to mean including the method, blocks, or elements identified, but that such blocks or elements do not comprise an exclusive list and a method or apparatus may contain additional blocks or elements.

As used in this application, the term 'circuitry' may refer to one or more or all of the following: (a) hardware-only circuit implementations (such as implementations in only analog and/or digital circuitry) and (b) combinations of hardware circuits and software, such as (as applicable) : (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor (s) or a portion of a microprocessor(s), that requires software (e.g., firmware) for operation, but the software may not be present when it is not needed for operation. This definition of circuitry applies to all uses of this term in this application, including in any claims.

As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from scope of this specification.

## Claims

1. An apparatus, comprising:
means for determining an initial encoding parameter set based on at least one initial task associated with data subject to encoding;
means for encoding the data based on the initial encoding parameter set;
means for determining a subsequent encoding parameter set based on at least one subsequent task in a sequence of tasks associated with the data; and
means for encoding at least one portion of the data based on the subsequent encoding parameter set.

2. The apparatus according to claim 1, further comprising:
means for determining a plurality of subsequent encoding parameter sets corresponding to a plurality of subsequent tasks in the sequence of tasks.

3. The apparatus according to any preceding claim, wherein the sequence of tasks comprises an object detection and classification task and at least one of an event classification task, an activity classification task, or an object tracking task, and wherein the at least one subsequent task is determined based on a class of a detected object.

4. The apparatus according to claim 3, wherein the at least one portion of the data is determined based on a spatial or spatio-temporal location of the detected object.

5. The apparatus according to any preceding claim, further comprising:
means for transmitting the data encoded based on the initial encoding parameter set to a decoder device; and/or
means for transmitting the at least one portion of the data encoded based on the subsequent encoding parameter set to the decoder device.

6. The apparatus according to any preceding claim, further comprising:
means for estimating the at least one subsequent task based on simulation of a plurality of previous tasks, wherein the simulation of the plurality of previous tasks is based on the at least one portion of the data encoded with a previous encoding parameter set or the at least one portion of the data encoded with a plurality of previous encoding parameter sets; and/or
means for determining the at least one portion of the data based on simulation of the plurality of previous tasks, wherein the performance of the plurality of previous tasks is based on data encoded with the previous encoding data set or data encoded with the plurality of previous encoding parameter sets.

7. The apparatus according to any preceding claim, wherein the at least one initial task comprises a plurality of initial tasks, wherein the at least one subsequent task comprises a plurality of subsequent tasks, and/or wherein the at least one previous task comprises a plurality of previous tasks.

8. An apparatus, comprising:
means for receiving data encoded based on an initial encoding parameter set, wherein the initial encoding parameter set is associated with at least one initial task;
means for decoding the received data and causing performance of the at least one initial task based on the decoded data;
means for receiving at least one portion of the data encoded based on a subsequent encoding parameter set associated with at least one subsequent task in a sequence of tasks; and
means for decoding the at least one portion of the data and causing performance of the at least one subsequent task based on the at least one decoded portion of the data.

9. The apparatus according to claim 8, further comprising:
means for receiving data encoded based on a plurality of subsequent encoding parameter sets corresponding to a plurality of subsequent tasks in the sequence of tasks; and
means for decoding the data encoded based on the plurality of subsequent encoding parameter sets and means for performing the plurality of subsequent tasks in the sequence of tasks.

10. The apparatus according to claim 8 or claim 9, further comprising:
means for determining the at least one subsequent task based on performance of the at least one initial task and/or at least one previous task; and/or
means for determining the at least one portion of the data based on the performance of the at least one initial task or the at least one previous task.

11. The apparatus according to any of claims 8 to 10, wherein the sequence of tasks comprises an object detection and classification task and at least one of an event classification task, an activity classification task, or an object tracking task, and wherein the at least one subsequent task is determined based on a class of a detected object.

12. The apparatus according to claim 11, wherein the at least one portion of the data is determined based on a spatial or spatio-temporal location of the detected object.

13. The apparatus according to any of claims 8 to 12, further comprising:
means for determining the at least one subsequent task based on performance of a plurality of previous tasks, wherein the performance of the plurality of previous tasks is based on the at least one portion of the data encoded with a previous encoding parameter set or the at least one portion of the data encoded with a plurality of previous encoding parameter sets; and/or
means for determining the at least one portion of the data based on performance of the plurality of previous tasks, wherein the performance of the plurality of previous tasks is based on data encoded with the previous encoding data set or data encoded with the plurality of previous encoding parameter sets.

14. A method, comprising:
determining an initial encoding parameter set based on at least one initial task associated with data subject to encoding;
encoding the data based on the initial encoding parameter set;
determining a subsequent encoding parameter set based on at least one subsequent task in a sequence of tasks associated with the data; and
encoding at least one portion of the data based on the subsequent encoding parameter set.

15. A method, comprising:
receiving data encoded based on an initial encoding parameter set, wherein the initial encoding parameter set is associated with at least one initial task;
decoding the received data and causing performance of the at least one initial task based on the decoded data;
receiving at least one portion of the data encoded based on a subsequent encoding parameter set associated with at least one subsequent task in a sequence of tasks; and
decoding the at least one portion of the data and causing performance of the at least one subsequent task based on the at least one decoded portion of the data.
